# EUROPÄISCHE PATENTSCHRIFT

(11) **EP 3 027 955 B1**
(45) Veröffentlichungstag und Bekanntmachung des Hinweises auf die Patenterteilung: **27.11.2019**
(21) Anmeldenummer: 14727857.6
(22) Anmeldetag: 05.06.2014
(51) Int. Cl.: F17C 1/06

(54) **TANK**
TANK
RÉSERVOIR

(30) Priorität: 29.07.2013 DE 102013214786
(43) Veröffentlichungstag der Anmeldung: 08.06.2016
(73) Patentinhaber: ComITen GbR, 53604 Bad Honnef (DE)
(72) Erfinder: MODDEMANN, Horst, 53604 Bad Honnef (DE)
(74) Vertreter: Gille Hrabal
(86) Internationale Anmeldenummer: PCT/EP2014/061720
(87) Internationale Veröffentlichungsnummer: WO 2015/014517

(56) Entgegenhaltungen:
- WO-A1-2004/026716
- DE-A1- 10 335 245
- DE-A1-102009 029 245
- GB-A- 2 356 211
- US-A- 3 409 061
- US-A- 4 360 116
- US-A1- 2004 089 440
- US-B1- 6 655 156
- US-B1- 7 117 908

## Beschreibung

Die Erfindung betrifft einen Tank, insbesondere einen Hochsicherheitstank, vorzugsweise für die Speicherung und Lagerung eines kryogenen Mediums, gemäß dem Oberbegriff des Hauptanspruchs.

Heutige Tanks zur Speicherung und Lagerung von Medien haben in einigen Industriebereichen hohe Sicherheitsauflagen zu erfüllen, beispielsweise Tanks für Benzin, Kerosin oder Brenngase. Tanks etwa für den Transport radioaktiver Stoffe oder kryogener Medien unterliegen besonders hohen Sicherheitsauflagen und sollen insbesondere crash-sicher ausgestaltet sein, so dass Leckagen selbst bei Auftreffen von spitzen Gegenständen oder Splittern wie Geschosse vermieden werden können.

Aufgrund der Gefahr für die Umwelt bei Beschädigung eines Tanks bzw. Hochsicherheitstanks für den Transport oben genannter Gefahrenstoffe in Folge etwa eines Verkehrsunfalls muss ein solcher Tank extremen äußeren Krafteinwirkungen und Umgebungsbedingungen standhalten können. Der Herstellungsaufwand, die Größe und das Gewicht solcher Tanks sind daher sehr hoch.

Kryogentanks, also Tanks für die Speicherung und Lagerung eines kryogenen Mediums, beispielsweise Wasserstoff oder Methangas, werden üblicherweise aus besonders hoch legierten metallischen Werkstoffen, vorwiegend Nickel-Stahl-Verbindungen, hergestellt, um crash-sicher und kälteresistent zu sein. Zur Erzielung einer hinreichenden Isolation weisen Kryogentanks in der Regel eine besonders hochwertige Wärmedämmung auf, die üblicherweise mithilfe einer Doppelwandkonstruktion mit zwischenlagigem Vakuum oder einer Granulatfüllung realisiert wird. Bei der Lagerung und Speicherung von LNG (Liquefied Natural Gas), also verflüssigtes Erdgas, müssen Temperaturen von bis zu ca. -164 °C unter Normaldruck aufrechterhalten werden, bei verflüssigtem Wasserstoffgas sogar ca. - 253 °C.

Die Volumendichte eines kryogenen Kraftstoffs wie LNG ist im kryogenen Zustand unterhalb des Siedepunktes um den Faktor 600 höher als in der Gasphase. Ein Kryogentank kann somit deutlich platzsparender ausgeführt werden selbst als ein Hochdrucktank. Zum Beispiel ist das Volumen von einem 200 bar Tank immer noch in der Regel um den Faktor 3 bis 4 höher als von LNG. Tanks für Wasserstoffgas werden häufig als sperrige Kugelform ausgestaltet, um dem hohen Gasdruck standhalten zu können. Daher werden Kryogentanks trotz des hohen Herstellungsaufwands und Gewichts zum Transport auf dem Land, auf See sowie in der Luft- und Raumfahrt eingesetzt.

Für den Einsatz eines Tanks zum Speichern eines kryogenen Mediums als Kraftstoff für ein Transportmittels ist es zudem erforderlich, dass der Tank auch für Druckbetankung geeignet ist. Da durch Erwärmen eines Kryogentanks das darin gespeicherte kryogene Medium in der Regel teilweise verdampft und sogenanntes Boil-Off Gas bildet, sollen bei einer Betankung die Boil-Off Gefahren infolge von Wärmeübertragung in den Tank von außen nach innen hinein möglichst vermieden bzw. auf ein Minium reduziert werden. Bei der Betankung von kryogenem Gas in einen "erwärmten" Tank hinein, also einem Tank über Solltemperatur, ist zudem regelmäßig ein Absaugen von verdampftem Gas bzw. Boil-Off Gas erforderlich, wobei die abgesaugten Gase aufwendig aufgefangen oder zwischengelagert werden müssen.

Insbesondere in der Automobilindustrie wird daher nach Lösungen zur Überwindung der oben genannten Probleme und zur Erzielung einer einfacheren Bedienbarkeit gesucht, um eine breite Einführung zukunftsorientierter und umweltfreundlicher Kraftstoffe auch für LKWs, PKWs und anderer kleinen Straßenfahrzeuge zu ermöglichen.

Aus der Druckschrift US 4 360 116 A ist ein Tank mit einer Öffnung bekannt. Der Tank ist innen mit einer zum Beispiel aus Gummi bestehenden Barriere versehen. Eine außen liegende Barriere besteht zum Beispiel aus Metall.

Es ist Aufgabe der Erfindung, einen weiterentwickelten Tank bereitzustellen.

Zur Lösung der Aufgabe wird ein Tank, insbesondere ein Hochsicherheitstank, vorzugsweise für die Speicherung und Lagerung eines kryogenen Mediums, mit einem Behälter bereitgestellt, der eine Öffnung und einen Deckel vorsieht. Am Behälter liegt innen und außen eine flexible Hülle an.

Durch die flexible Hülle, welche innen und außen am Behälter anliegt, kann ein crash-sicherer Tank bereitgestellt werden, der Beschädigungen und Leckagen infolge von auftreffenden spitzen Gegenständen besonders wirkungsvoll entgegengewirkt.

Eine flexible Hülle kann im Vergleich zu einer steifen Oberfläche die kinetische Energie eines auftreffenden, spitzen Gegenstands durch Verformungsarbeit der Hülle besser aufnehmen und so einem Durchdringen der Hülle wirkungsvoller entgegenwirken.

Der Erfindung liegt die Erkenntnis zu Grunde, dass eine größere Fläche entsprechend größere Verformungsarbeit zu leisten vermag und daher die Widerstandsfähigkeit der Hülle gegen eindringende, spitze Gegenstände mit der Größe der Fläche der flexiblen Hülle steigt.

Durch eine flexible Hülle, welche nicht nur innen oder außen, sondern innen und außen am Behälter anliegt, wird eine größtmögliche Fläche und somit größtmöglicher Schutz vor Leckagen der Hülle ermöglicht.

Darüber hinaus ist eine flexible Hülle ebenfalls besonders widerstandsfähig gegen mechanische Belastungen, die etwa bei einem Unfall entstehen können, beispielsweise Zug-, Druck-, und Torsionskräfte. Zudem lässt sich eine flexible Hülle besonders einfach montieren.

Ist die flexible Hülle ausreichend widerstandsfähig gegen mechanische Belastungen und ebenso dicht und kälteresistent, so kann der Tank in gleicher Bauweise für die Lagerung und Speicherung einer Vielzahl unterschiedlicher Medien eingesetzt werden, beispielsweise als Flüssiggastank oder als Hochdruckgelagerter Gastank.

Wird der Tank für die Speicherung eines kryogenen Kraftstoffs in einem Fahrzeug eingesetzt, so kommt vorteilhaft zum Tragen, dass die Hülle verglichen mit einer Metallwand besonders wenig Wärme aufzunehmen vermag. Einer Gasverdampfung bzw. dem Boil-Off Effekt kann so entgegengewirkt werden. Ferner kann durch die flexible Hülle, welche innen und außen am Behälter anliegt, gleichzeitig ein Kühlen ermöglicht werden, wodurch der Boil-Off Effekt bei der Betankung und bei längeren Standzeiten des Fahrzeugs reduziert oder annährend gänzlich vermieden werden kann.

Die Hülle des Tanks ist einteilig ausgeführt.

Einteilig meint, dass die Hülle nicht aus mehreren Flächenstücken besteht, die miteinander verbunden sind, sondern dass die Hülle aus einem Grundmaterial in einem Teil hergestellt worden ist. Das Grundmaterial einer einstückigen Hülle kann dabei mehrere Teile und Werkstoffe umfassen, beispielsweise ein aus Fasern gewebtes Material oder eine mehrschichtige Folie. Die einteilige Ausführung bezieht sich lediglich auf die Hülle selber. Eine Hülle, dessen Ränder mit einem Verbindungsmittel miteinander oder mit einem angrenzenden Körper verbunden sind, ist ebenfalls einteilig im Sinne der vorliegenden Erfindung.

Durch die einteilige Ausführung der Hülle kann eine größere Widerstandsfähigkeit gegen eindringende, spitze Gegenstände erreicht werden. Eine einteilige Hülle ermöglicht im Vergleich zu einer mehrteiligen Hülle eine besonders große homogen beschaffene Fläche des Grundmaterial auf. Inhomogene Flächenbereiche sind in der Regel weniger widerstandsfähig gegen Belastungen und können daher Ausgangspunkt von Leckagen sein. Durch eine einstückige Hülle können inhomogene Flächenbereiche, welche grundsätzlich durch ein Verbinden miteinander oder zu angrenzenden Körpern entstehen, reduziert werden.

Ferner können durch das Vorsehen einer einteiligen Hülle Fügeschritte, die bei einer mehrteiligen Hülle für die Montage benötigt würden, eingespart werden und die Hülle zudem als Halbzeug serienmäßig, also kostengünstig, vorproduziert werden. Ein Tank kann so mit besonders geringerem Herstellungsaufwand bereitgestellt werden.

Die Hülle ist strumpfförmig ausgestaltet.

Eine Strumpfform kann einteilig vorproduziert werden und ermöglicht durch Umschlagen an der Öffnung des Behälters ein Anliegen innen und außen am Behälter mit großer, homogener Fläche. Eine besonders große Widerstandsfähigkeit der Hülle gegen eindringende, spitze Gegenstände kann so erzielt werden.

Eine Hülle mit Strumpfform kann ferner mit besonders geringem Aufwand montiert werden.

In einer Ausführungsform ist eine Öffnung der Hülle kraftschlüssig oder stoffschlüssig verschlossen, beispielsweise durch Verdrillen und Verklammern oder Verkleben.

Durch das Verschließen einer Öffnung der Hülle kann ein Behälter mit einer einteiligen Hülle vollständig ausgekleidet werden. Zusätzliche Flächenstücke und damit verbundene größere, inhomogene Verbindungsbereiche oder Verbindungsnähte können so eingespart werden. Ein Verdrillen einer Öffnung der Hülle ist eine besonders einfache Art, eine Öffnung zu Schließen. Die Hülle wird durch ein Verdrillen vergleichsweise wenig geschwächt. Durch eine kraftschlüssige oder stoffschlüssige Verbindung kann besonders einfach ein Verschließen der Öffnung realisiert werden, insbesondere durch eine Klammer- oder Klebverbindung.

In einer Ausführungsform ist die Hülle eine flexible Folie oder ein gewebtes Material, vorzugsweise hoch gasdicht, reis- und druckfest und/oder resistent gegen hohe Temperaturschwankungen nahe dem absoluten Nullpunkt von 0 K, also -273 °C, insbesondere auf Basis von Aramid, Graphen oder Kohlenstoffnanoröhren. Optional kann die flexible Folie oder das gewebte Material auch mit einer Imprägnierung, einem Schutzüberzug oder Coating versehen werden.

Durch eine flexible Folie oder eine gewebtes Material kann eine Hülle geringer Dicke und somit ein Tank mit geringem Gewicht und Abmessungen bereitgestellt werden. Darüber hinaus ermöglicht eine flexible Folie oder eine gewebtes Material ein Umschlagen an der Öffnung des Behälters und somit eine große, homogene Fläche, welche zudem mit geringem Montageaufwand realisiert werden kann.

Beispielsweise handelt es sich bei der Hülle um eine durch Aramid verstärkte oder aus Aramid bestehende Hülle, so zum Beispiel um eine mit Aramid-Fasern verstärkte Hülle, die nachfolgend Aramid-Hülle genannt wird. Aramid-Fasern werden von der Firma DuPont unter der Marke Kevlar® kommerziell vertrieben und auch in gewebter, gasdichter Konfiguration angeboten. Die Webstruktur kann im Webverfahren geändert werden, so dass eine flexible Hülle beispielsweise in Strumpfform bereitgestellt werden kann.

Eine Aramid-Hülle oder Kevlar-Hülle ist besonders widerstandsfähig gegenüber mechanischen Belastungen und gleichzeitig hinreichend kälteresistent für die Speicherung von beispielsweise kryogenen Medien wie LNG (Liquefied Natural Gas) oder flüssiges Helium. Zudem ist eine Aramid-Hülle gasdicht und chemisch inert, also korrosionsbeständig.

Graphen, entwickelt von dem Nobelpreisträger Prof. Andre Greim aus Russland, der seit vielen Jahren in Großbritannien arbeitet, bezeichnet ein Material, welches eine zweidimensionale Struktur von Kohlenstoffatomen (Graphit) umfasst. Graphen ist extrem dünn, gasdicht und ebenfalls besonders widerstandsfähig gegenüber mechanischen Belastungen. Zusätzlich ist Graphen elektrisch leitend, antibakteriell und kann mit Folien oder gewebtem Aramit adhäsiv verbunden werden, also beispielsweise auf Schaumstoff aufgeklebt werden.

Kohlenstoffnanoröhren, auch als CNT bzw. carbon nanotubes bekannt, sind kleine röhrenförmige Gebilde bzw. molekulare Nanoröhren aus Kohlenstoff. Die Struktur eines Kohlenstoffnanoröhren entspricht der eines aufgerollten Graphen-Röhrchens. Die Eigenschaften einer Hülle aus Kohlenstoffnanoröhren können ähnlich denen einer Aramid-Hülle oder einer Hülle aus Graphen sein.

Graphen und Kohlenstoffnanoröhren können grundsätzlich als Folie oder auch als Fasern bereitgestellt werden und verfügen über eine große Reißfestigkeit und Streckgrenze. Graphen ist zudem elektrisch hoch leitfähig, antibakteriell und verfügt über eine besonders große Oberflächenverschleißfestigkeit.

In einer Ausführungsform ist die Hülle ein gewebtes Material, vorzugsweise aus Aramid-Fasern, welches unterschiedliche Durchmesser und/oder unterschiedliche Dichten aufweist, beispielsweise in Längserstreckung der Hülle.

Organische, hochfeste Fasern und Kunstfasern können wie Aramid-Fasern ebenfalls zu einer Hülle mit unterschiedlichen Durchmesser und Dichten gewebt werden, beispielsweise zu einer Schlauch- oder Strumpfform mit unterschiedlichen Durchmessern und Dichteverteilung entlang der Längsachse. Durch die Realisierbarkeit einer bestimmten Dichteverteilung über die flexible Hülle können die mechanischen Eigenschaften der flexiblen Hülle gezielt und lokal beeinflusst werden, so zum Beispiel die Streckgrenze.

Eine Hülle aus gewebtem Material mit unterschiedlichen Durchmessern und/oder unterschiedlichen Dichten kann besonders genau an die Tankgeometrie und Schnitt- bzw. Verbindungsstellen zu angrenzenden Körpern angepasst werden. Eine besonders hohe Crash-Sicherheit kann so erzielt werden. Ferner unterstützt die flexible Gestaltbarkeit der Hülle die Verwendung der Hülle zum Kühlen des Tanks.

In einer Ausführungsform liegt die Hülle innen und/oder außen mehrlagig gewickelt an dem Behälter an.

Mehrlagig gewickelt bedeutet, dass die Hülle, strumpfförmig ausgeführt, mehrfach in den Behälter hineingesteckt, an der Öffnung des Behälters umgeschlagen, am Behälterboden verdrillt und erneut in den Behälter hineingesteckt wurde. Mehrere gewickelte Lagen liegen dann an dem Behälter an.

Durch eine mehrlagig gewickelte Hülle, welche innen und außen am Behälter anliegt, kann die Fläche der Hülle weiter vergrößert werden und somit eine größere Widerstandsfähigkeit gegen eindringende, spitze Gegenständer erzielt werden.

Die Hülle kann beispielsweise außen einlagig und innen dreilagig anliegen, wodurch neben einer besonders hohen Sicherheit zusätzlich ein Kühlen des Tanks ermöglicht werden kann.

In einer Ausführungsform ist der Behälter des Tanks aus einem kompressiblen und/oder wärmedämmenden Material hergestellt, vorzugsweise Schaumstoff.

Durch ein kompressibles Material kann die Widerstandsfähigkeit des Tanks gegen eindringende, spitze Gegenstände zusätzlich erhöht werden, weil so der Behälter besonders große Verformungsarbeit zu leisten vermag. Aber auch eine besonders hohe Widerstandsfähigkeit gegen mechanische Belastungen, die etwa bei einem Unfall entstehen können, beispielsweise Zug-, Druck-, und Torsionskräfte, kann so erzielt werden.

Durch das Vorsehen eines wärmedämmenden Materials für den Behälter kann der Tank zur Lagerung und Speicherung von Medien eingesetzt werden, welche die Aufrechterhaltung entweder sehr hoher oder sehr niedriger Temperaturen verlangen. Als Beispiel seien Tanks für kryogene Medien angeführt, etwa für LNG oder flüssiges Methangas mit einer atmosphärischen Lagertemperatur von ca. -164 °C oder flüssigen Wasserstoff mit einer atmosphärischen Lagertemperatur von ca. -253 °C. Eine aufwendige Isolationseinrichtung, z.B. Doppelwandkonstruktion mit zwischenlagigem Vakuum oder einer Granulatfüllung, kann so eingespart werden.

Schaumstoff ist ein besonders kostengünstiger, wärmedämmender und kompressibler Werkstoff, der die obigen beschriebenen vorteilhaften Wirkungen ermöglicht.

In einer Ausführungsform ist der Behälter bzw. die Behälterwand innen und/oder außen beschichtet oder mit einer Primärhülle versehen.

Eine Primärhülle ist eine von der flexiblen Hülle des Hauptanspruchs unabhängige zumeist formstabile Schicht, die zwischen der Behälterwand und der vorgenannten flexiblen Hülle angeordnet ist und am Behälter, also an der Behälterwand, anliegt. Anstelle eines Anliegens am Behälter kann auch ein flächiger, fester Verbund der Beschichtung oder der Primärhülle mit dem Behälter bzw. der Oberfläche der Behälterwand vorgesehen werden.

Der Behälter weist vorzugsweise eine Primärhülle auf Basis von Graphen auf. Grundsätzlich kann die Beschichtung oder Primärhülle aber auch auf Basis von Aramid oder Kohlenstoffnanoröhren aufgebaut sein.

Insbesondere bei einem Behälter bestehend aus unterschiedlichen gut isolierenden Materialdicken aus Schaumstoff oder Polyurethan-Schaumstoff kann besonders hohe Formstabilität, hoher Festigkeitsverbund und hohe Gasdichte durch beidseitig aufgetragenes Graphen erzielt werden, insbesondere mithilfe einer strumpfförmigen Graphen-Primärhülle. Besonders geeignet ist ein solcher Werkstoffverbund als Kernaufbau bzw. Behälter eines Tanks im Bereich Luft- und Raumfahrt.

Eine Primärhülle kann ebenfalls in Form einer Vielzahl von sehr dünnen Aluminium-Folien, wie diese in der Raumfahrt als Kälte-Strahlungsschutz verwendet werden, ausgeführt sein und so neben der Wandstärke des Schaumstoffs eine besonders große Isolationswirkung ermöglichen. Im letzteren Fall kann die Primärhülle aus Aluminium-Folien zusätzlich mit einer einfachen Polyethylenhülle, auch PE Hülle genannt, abgedeckt werden, um die Tankaufbaukonstruktion zu schützen.

Durch einen Behälter mit innen und/oder außen versehener Beschichtung oder Primärhülle können ein doppelter Schutz gegen eindringende, spitze Gegenstände sowie die weiteren oben genannten vorteilhaften Eigenschaften und Wirkungen dieser Werkstoffe erzielt werden.

In einer Ausführungsform ist der Deckel, der an die Hülle des Behälters angrenzt, mit der Öffnung formschlüssig, kraftschlüssig und/oder stoffschlüssig verbunden, insbesondere durch ein selbstexpandierendes Element, eines Formgedächniselements, einer Schraub- oder Klebverbindung. Der Deckel wird also mit der Hülle verbunden, welche am Behälter anliegt.

Optional kann der Auflagebereich des Behälters durch einen Dichtring aus druckfestem Material ersetzt oder unterfüttert werden, wobei der Dichtring an den Behälter angrenzend zusammen mit dem Behälter von der flexiblen Hülle umhüllt wird. Eine besonders hohe Druckstabilität und Langlebigkeit des Tanks selbst bei häufigen Öffnen und Schließen des Deckels kann so erzielt werden.

Durch eine formschlüssige, kraftschlüssige und/oder stoffschlüssige Verbindung kann eine Deckel-Behälter-Verbindung geschaffen werden, welche besonders dicht, druckfest und widerstandsfähig gegen mechanische Belastungen sein kann.

Ein selbstexpandierendes Dichtelement bzw. Element ist ein Körper aus einem Werkstoff oder eine Vorrichtung bzw. Pyrotechnik, welche durch einen Auslösemechanismus ihr Volumen vervielfachen. Ein bekanntes Beispiel für ein selbstexpandierendes Element ist die selbstexpandierende Komponente eines Airbags.

Ein Formgedächniselements ist ein Körper aus einem Werkstoff oder eine Vorrichtung, welche durch einen Auslösemechanismus eine vorbestimmte Form einnehmen können. Ein Beispiel für ein Formgedächniselement ist ein metallischer Körper mit Nickel-TitanLegierung wie etwa Nitinol.

Durch ein selbstexpandierendes Element oder ein Formgedächniselement kann eine mechanisch besonders zuverlässige form- oder kraftschlüssige Verbindung erzeugt werden bzw. durch pyrotechnische Maßnahmen zur Auslösung gebracht werden. Schraub- oder Klebverbindungen sind besonders einfach und kostengünstig zu realisieren.

In einer Ausführungsform weist der Deckel mindestens einen Durchlass und/oder ein oder mehrere Ventile auf.

Durch einen Deckel mit Durchlassöffnungen bzw. Durchlass wird ein Füllen und Leeren des Tanks ermöglicht, ohne den Deckel öffnen zu müssen. Ein solcher Durchlass kann daher vorteilhaft sowohl bei einem fest mit dem Behälter verbundenen Deckel also auch bei einem Deckel, welcher ein Öffnen und Schließen erlaubt, vorgesehen werden. Ein Ventil ermöglicht überdies das Vorsehen eines Überdruckschutzes oder anderer typischer Einrichtung, für welche üblicherweise ein Ventil eingesetzt werden kann.

In einer Ausführungsform wird als Material des Deckels und/oder einer Komponente, die mit dem Deckel verbunden wird, an den Deckel angrenzt oder durch den Deckel durchgeführt wird, beispielsweise ein Ventil oder eine Zu- und Ableitung, ein hochwertiger Nickel-Stahl verwendet, insbesondere mit einem Ni-Anteil von ca. 20%. Durch Verwendung dieses Materials wird ein sehr geringer Ausdehnungskoeffizient bei sehr niedrigen Temperaturen ermöglicht und somit eine besonders hohe Dichtigkeit bei formschlüssigen oder kraftschlüssigen Verbindungen, wie beispielsweise Schraubverbindungen, erzielt.

In einer Ausführungsform weist der Tank nur eine Öffnung und nur einen Deckel zum Verschließen der Öffnung auf. Durch einen Tank mit nur einer Öffnung und nur einem Deckel können alle Bedienelemente sowie Zu- und Abführungen des Tanks durch den Deckel erfolgen bzw. am Deckel zentral angeordnet werden, wodurch eine besonders einfache Bedienbarkeit und hohe Sicherheit sowie eine Gewichtseinsparung erzielt werden kann.

In einer Ausführungsform ist der Behälter zur Öffnung hin verjüngt und/oder die Öffnung ist ovalförmig, wobei der Behälter im Bereich der Öffnung vorzugsweise ein druckfestes Material aufweist, um insbesondere den Verschlusskräften des Deckels, sowie dem Deckelgewicht mit seinen Gasanschlüssen einen Widerstand und Halt zu verleihen.

Ein zur Öffnung hin verjüngter Behälter ermöglicht ebenso wie eine ovalförmige Öffnung auf besonders einfache Weise das Vorsehen eines Deckels, welcher sich öffnen und schließen lässt. Besonders bevorzugt ist dabei ein Behälter, der sich zur Öffnung hin verjüngt und die Öffnung zudem ovalförmig ist. In allen oben genannten Ausführungsalternativen kann durch ein druckfestes Material, also beispielsweise ein druckfester Kunststoff oder Metall, eine besonders große Verschleißfestigkeit und Langlebigkeit der Deckel-Öffnung-Schnittstelle erzielt werden.

In einer Ausführungsform kann der Deckel eine Geöffnet-Stellung und Geschlossen-Stellung einnehmen, wobei der Deckel insbesondere ein relativ zum Behälter innenliegendes Teil und außenliegendes Teil umfasst und beide Teile vorzugsweise ein Magnetelement aufweisen.

Ein Deckel, der eine Geöffnet-Stellung und Geschlossen-Stellung einnehmen kann, sich also öffnen und schließen lässt, kann durch das Vorsehen von einem zum Behälter innenliegendes Teil und außenliegendes Teil besonders dicht und zuverlässig verschlossen und geöffnet werden. Das Grundprinzip wird bereits in abgewandelter Form im U-Boot- und Flugzeugbau für Türen eingesetzt, die besonders druckfest verschlossen werden müssen.

Durch das Vorsehen von Magnetelementen an sich gegenüberliegenden Positionen am innenliegenden Teil und außenliegenden Teil des Deckels kann in Geschlossen-Stellung durch die zusätzliche magnetische Zugkraft zwischen den beiden Teilen ein besonders dichtes Verschließen des Deckels zum Behälter erzielt werden.

In einer Ausführungsform kann der Behälter mindestens zwei Teile umfassen, welche vorzugsweise kraft- oder formschlüssig miteinander verbunden werden, insbesondere durch ein selbstexpandierendes Element oder ein Formgedächniselement.

Ein mindestens zweiteiliger Behälter kann besonders einfach hergestellt werden, insbesondere ein besonders langer Behälter oder ein Behälter, der sich zur Öffnung hin verjüngt. Die vorteilhaften Wirkungen bei der Verbindung von zwei Körpern durch ein selbstexpandierendes Element oder ein Formgedächniselement wurden bereits bei der BehälterDeckel-Verbindung beschrieben.

In einer Ausführungsform ist die Hülle innen derart mehrlagig gewickelt am Behälter anliegend, dass die Hülle einen geschlossenen Raum ausbildet, in dem insbesondere eine spiralförmig umlaufende Kühlleitung angeordnet ist, wobei eine vorzugsweise temperatur- und/oder druckabhängige Zu- und Ableitung von Kühlmittel vorgesehen ist.

Zur Herstellung dieser Ausführungsform eines Tanks wird die Hülle, die eine Strumpfform aufweist, mit dem geschlossenen Ende in den Behälter reingesteckt und das offene Ende der Hülle ins Innere des Behälters bzw. in Richtung Behältermitte umgeschlagen, so dass eine zweite, innere, zylindrische Schicht der Hülle entsteht. Am Boden des Behälters erfolgt ein erneutes Umschlagen ins Innere des Behälters. Die Hülle wird weiter bis zur Öffnung des Behälters angelegt, so dass im Inneren des Behälters drei Lagen derselben Hülle übereinander am Behälter anliegen und das Innenvolumen des Behälters zylindrisch ummanteln. Das offene Ende der Hülle wird an der Öffnung des Behälters nach außen umgeschlagen und an der Außenseite des Behälters entlanggeführt, bis das offene Ende der Hülle in einem Punkt am äußeren Boden des Behälters zusammentrifft und beispielsweise fest und dicht verklammert werden kann. Eine besonders hohe Crash-Sicherheit und Isolation können so erzielt werden.

Eine hohe Isolationswirkung kann erzielt werden, wenn der durch die Hülle im Inneren des Behälters ausgebildete, geschlossene, zylindrische Raum mit einer Druckkörnung in Form von beispielsweise Kunststoffkügelchen gefüllt und unter Vakuum gesetzt wird.

Alternativ kann der durch die Hülle im Inneren des Behälters ausgebildete, geschlossene, zylindrische Raum auch mit einer spiralförmig umlaufenden Kühlleitung versehen werden, welche bei einer steifen Ausführung der Kühlleitung unter Vakuum gesetzt und so ebenfalls die Isolationswirkung der Hülle unterstützen kann.

Wird in die Kühlleitung ein Kühlmittel zugeführt, so kann der Tank gekühlt werden. Der Tank kann ebenfalls gekühlt werden, wenn keine Kühlleitungen vorgesehen sind und ein Kühlmittel direkt in den durch die Hülle ausgebildeten Raum zugeführt wird. Ein solches Kühlen ermöglicht, dass der Boil-Off Effekt bei der Betankung und bei längeren Standzeiten des Fahrzeugs reduziert oder annähernd gänzlich vermieden werden kann.

Das Kühlen des Tanks kann noch weiterentwickelt werden, indem eine Steuerungseinheit für eine temperatur- und/oder druckabhängige Zu- und Ableitung des Kühlmittels vorgesehen ist. Steigt der Gasdruck im Kryogentank über einen vorbestimmten Grenzwert an, so wird Kältemittel zugeführt. Damit sinkt der Gasdruck im Kryogentank ab und der Kühlmitteldurchsatz kann verringert werden bis zu einer vorgegebenen Grenztemperatur im Kryogentank. Diese Kältezufuhr muss in Abhängigkeit der mitgeführten Kühlkapazität liegen, also der unter Hochdruck gelagerten Kühlmittelmenge.

Der unmittelbar mit Kühlmittel befüllbare Hüllenraum oder die spiralförmige Kühlleitung können überdies derart ausgelegt sein, dass bei Zufuhr des Kühlmittels der Hüllenraum oder die Kühlleitung sich ausdehnen und die Oberfläche vergrößern. Der Hüllenraum könnte beispielsweise wie eine Ziehharmonika expandieren und sich wieder Zusammenziehen. Eine besonders große Kühlwirkung kann so erzielt werden.

Beim Einsatz eines Tank mit oben beschriebener Kühlung in einem Fahrzeug kann durch das Vermeiden oder Verringern der Boil-Off Effekte bei der Betankung und im täglichen Betrieb eine besonders einfache Bedienbarkeit bei der Betankung für den Benutzer ermöglicht werden.

In einer weiteren Ausführungsform ist eine vertikale Ausrichtung des Tanks mit einer Zuleitung zum Befüllen des Tanks an der Oberseite des Tanks vorgesehen.

Bei einer Betankung eines Tank für LNG-Treibstoff kann durch die vertikale Montage und die Zuleitung auf der Oberseite des Tanks bewirkt werden, dass eine Kühleinrichtung in die entnommene Flüssigkeitsmenge hinein ragt, also die verdampfte Gasmenge gekühlt wird. Damit kann vermieden werden, dass sich im oberen Bereich des Tanks mehr CH4 und N2 bildet, welche leichter sind als der restliche Tankinhalt und dem Motor durch eine niedrigere Methanzahl und Klopffestigkeit schaden können, was derzeit bei konventionellen LNG Tanks der Fall ist und dieser Effekt vom Motorenentwickler mit zusätzlichem Aufwand bzw. Leistungsminderung kompensiert werden muss.

In einer weiteren Ausführungsform sind mehr als eine flexible und insbesondere strumpfförmige Hülle vorgesehen, welche so geformt und gewickelt sind, dass die Hüllen im Inneren des Behälters geschlossene Räume ausbilden können, die wie Blüten in den Tank hineinragen können. Durch das Füllen mit Kühlmittel kann so das Gas, das unter Boil-Off Druck steht abgekühlt und der Druck im Tank reduziert werden. Eine Vakuumpumpe kann ferner eingesetzt werden, um das Kühlmittel etwa N2 Gas abzupumpen, so dass sich die in den Tank hineinragenden Hüllenräume wieder zusammenziehen, um ausreichend Platz für die Aufnahme von Kraftstoff bereitzustellen.

In einer weiteren Ausführungsform ist eine Vakuum-Isolierung zwischen dem innenliegenden Teil und außenliegenden Teil des Deckels vorgesehen. Eine besonders hohe Isolierleistung kann so erzielt werden.

Ein weiterer Aspekt der Erfindung betrifft einen Registertank mit mehreren der oben beschriebenen Tanks, wobei die mehreren Tanks so miteinander verbunden sind, dass ein Medium von einem in einen anderen der mehreren Tanks gelangen kann, insbesondere durch ein Leitungssystem, eine Steuerung und/oder eine Schaltung für ein gezieltes und variables Verbindung der mehreren Tanks.

Ein Medium kann dabei ein flüssiger Stoff oder ein gasförmiger Stoff sein. Ebenfalls umfasst sind sowohl die flüssige als auch gasförmige Phase eines Stoffes. In letzterem Falle können dann eigene Verbindungen der mehreren Tanks für die jeweils unterschiedlichen Phasen des Mediums vorgesehen werden, beispielsweise eine Verbindungsleitung für eine flüssige Phase und eine andere Verbindungsleitung für eine Gasphase.

Die Vorteile eines Registertanks sind vielfältig. Je nach vorhandenem Bauraum oder benötigtem Fassungsvolumen kann ein Registertank durch das Verbinden einer beliebigen Anzahl der mehreren Tanks flexibel auf die jeweiligen Anforderungen angepasst werden.

Für die Lagerung von Medien, welche unter hohem Druck gelagert werden müssen, ermöglicht ein Registertank durch die beliebig wählbare Anzahl der mehreren Tanks eine größere Raumausnutzung, also das Lagern und Speichern von mehr Medium pro verfügbaren Bauraum. Denn ein Tank, der einem hohen Druck standhalten kann, ermöglicht eine erhöhte Standzeit unter Boiloff Bedingungen, weil z.B. der Siedepunkt ansteigt und bei höherem Druck > 20 bar bereit bei -120 °C liegt. Ein mit Aramit/ Kevlar-Inliner ausgestatteter Tank kann mit niedrigem Gewicht und Volumen einen Innendruck bis zu 250 bar auch in zylinderförmiger Bauweise festigkeits- und dichtigkeitsseitig standhalten. Bei einem einzelnen Tank in einem zumeist rechteckig verfügbaren Bauraum sind die Drücke begrenzt. Zusätzlich muss mehr Aufwand für die Isolation, und Boil off Stabilität getroffen werden, und kann erstmalig ein CNG/LNG Betrieb realisiert werden, der die Betankung Intervalle und Reichweiten in einem noch dünnbesiedelten LNG und CNG Tankstellennetz, in der Aufbaufase von Methankraftstoff entgegenkommt. Der Registertank mit den mehreren Tanks mit jeweils geringem Durchmesser ermöglicht eine größere Raumausnutzung und Energieeffizienz.

In vorbeschriebener Weise kann somit ein Registertank beispielsweise platzsparend in ein Kraftfahrzeug, etwa rückseitig an oder über einem Fahrerhaus eines LKWs, positioniert werden, um Kraftstoffe wie verflüssigtes Gas, etwa LNG, für den Antrieb des Fahrzeugs zu speichern und bereitzustellen. Die Lagerung von verflüssigtem Gas erfordert einen kälteresistenten, druckfesten und crash-festen Tank. Diese Anforderungen können durch den vorliegend beschriebenen Registertank erfüllt werden.

Bei der Speicherung von verflüssigtem Gas entstehen mit Erwärmung des Tanks Boiling-Off Gase. Durch Einsatz eines Registertanks für diese Anwendung gemäß der oben beschriebenen Ausführungsform kann folgender Synergieeffekt erzielt werden: Die entstehenden Boiling-Off Gase können im CNG/LNG Registertank mit Inliner von den mittig angeordneten der mehreren Tanks zu den außenliegenden der mehreren Tanks geleitet werden, welche regelmäßig einer größeren Erwärmung ausgesetzt sind und in denen folglich ohnehin bereits vermehrt Boiling-Off Gase entstehen. Die in den außenliegenden der mehreren Tanks gesammelten Boiling-Off Gase können zum Antrieb des LKWs unmittelbar genutzt und damit besonders einfach abgeführt und energieeffizient verwertet werden. Die Kühlung des Registertank insgesamt kann so verbessert werden. Eine höherer Wirkungsgrad sowie eine größere Reichweite des Fahrzeugs mit einer Tankfüllung wird so ermöglicht.

Eine weitere Besonderheit ist die Nutzung von LNG und flüssigem biologischem Methangas in einem gemeinsamen Tank. Die Mischung von Biomethan mit LNG kann über den Deckel mittels Einspritzung von mindestens einer Düse erfolgen, die in gleicher Art wie der hole Zugbolzen 26 bzw. 27 durch beide Deckelteile hindurchgeführt wird, mindestens eine Zuführrohrleitung hat die Biomethan kreisförmig um den Zugbolzen angebracht mit einer Mischdüse ausgestattet den Biomethan- Kraftsoff in das LNG, das bereits im Tank eingebracht worden ist einspritzt und mit LNG vermischt. Wobei eine Zuführung ausreicht und die Verteilung auf mehrere Einzeldüsen in den Innendeckel eingearbeitet worden sind. Eine gute Beimischung des Biomethangases entscheidet über eine gute Verbrennung im Motor. Sie ist aber auch für Tankstellen und Kraftstoff Verteil-Stationen von Bedeutung, weil sich sonst das höher %tige Biomethan geringerer Dichte im oberen Tank absetzt und bei Absaugung die Konsistenz des Kraftstoffes verändert. Die Vermischung LNG mit biologischem Methangas kann auch während des Kraftstoffverbrauchsvorganges allein über eine Umwälzpumpe erfolgen.

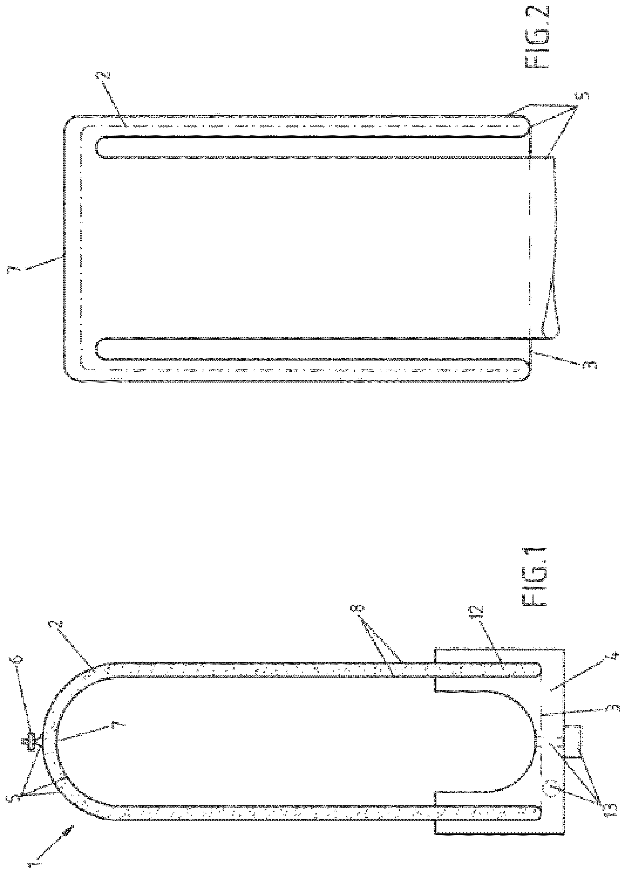

Die Figur 1 zeigt einen Tank 1 mit einem Behälter 2, einer Öffnung 3 des Behälters 2 und einem Deckel 4, der die Öffnung 3 verschließt. Eine flexible Hülle 5 liegt innen und außen am Behälter 2 an. Die Hülle 5 weist eine Strumpfform auf. Das geschlossene Ende 7 der Hülle 5 liegt am Grund im inneren des Behälters 2 an. Die strumpfförmige Hülle ist ferner an der Öffnung 3 umgeschlagen, also von innen nach außen herumgeführt. Das offene Ende der strumpfförmigen Hülle ist am äußeren Behälterboden verdrillt und durch einen Spannverschluss 6 kraftschlüssig verbunden. Die strumpfförmige Hülle ist einteilig und aus gewebten Aramid/Kevlar-Fasern hergestellt. Um die Widerstandsfähigkeit gegen Beschädigungen des Tanks 1 weiter zu erhöhen, kann der Behälter 2 vor Anbringen der Hülle 5 mit einer Graphen-Beschichtung 8 versehen werden. Die Behälter-Deckel-Verbindung 12 kann mittels eines Gewindes oder einer Klebverbindung realisiert werden, wobei der Deckel 4 auch im Bereich der BehälterDeckel-Verbindung 12 an die Hülle 5 angrenzt. Eine oder mehrere Einrichtungen 13 für ein Rein- und Rausleiten des Mediums mithilfe einer Leitung, eines Ventils, einer Steuerung und/oder Schaltung sind ebenfalls in dem in Figur 1 abgebildeten Tank 1 schematisch dargestellt.

Die Figur 2 zeigt schematisch ein weiteres Ausführungsbeispiel eines Tanks, bei dem die strumpfförmige Hülle 5 anders als im ersten Ausführungsbeispiel mit dem geschlossenen Ende 7 der Hülle 5 am äußeren Behälterboden anliegt. Die Hülle 5 ist ebenfalls an der Öffnung 3 umgeschlagen und liegt somit außen und innen am Behälter 2 an. Der Behälter 2 ist in Figur 2 nur durch eine Strichpunkt-Linie angedeutet. Durch ein weiteres Umschlagen der Hülle 5 am Grund im inneren des Behälters 2 liegt die Hülle 5 mehrlagig gewickelt im inneren des Behälters 2 an.

Durch ein Verdrillen am Grund im inneren des Behälters 2 kann die Hülle 5 optional neben den zylinderförmigen, inneren Behälterwänden auch am Grund im inneren des Behälters 2 anliegen.

Weitere Ausführungsbeispiele, welche nicht in den Figuren enthalten sind, umfassen Tanks 1, bei denen der Behälter 2 analog zu den oben beschriebenen Ausführungsbeispielen mehrfach durch eine strumpfförmige Hülle 5 umwickelt ist, wobei das geschlossenen Ende 7 der Hülle 5 entweder innen oder außen am Behälter anliegt und die Hülle mehrfach umgeschlagen und/oder verdrillt ist.

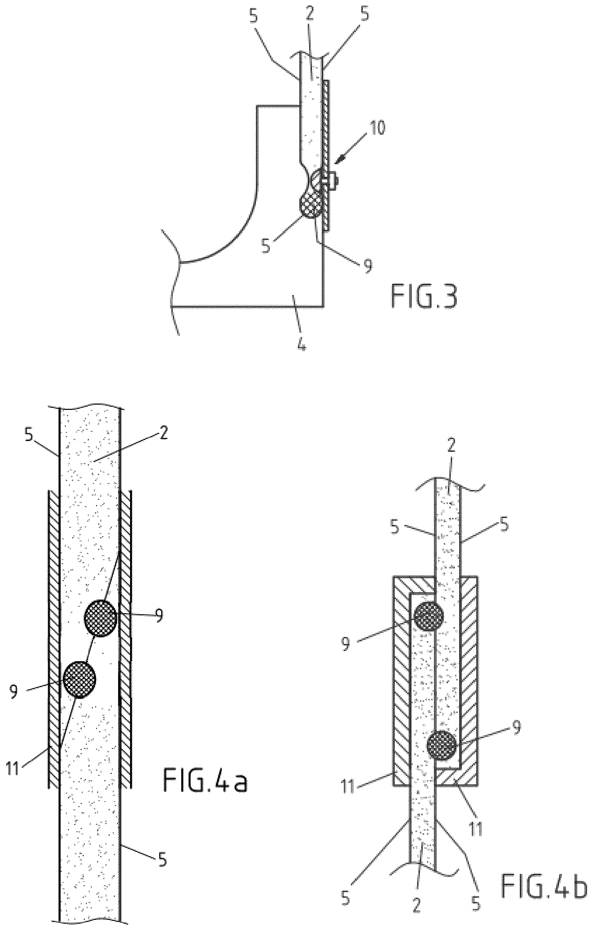

Die Figur 3 zeigt eine formschlüssige und gleichzeitig kraftschlüssige Verbindung des Behälters 2 mit dem Deckel 4, der an die Hülle 5 des Behälters 2 angrenzt. Die Verbindung ist mithilfe eines selbstexpandierenden Elements 9 realisiert, um eine besonders hohe Dichtheit zu ermöglichen. Eine Keilvorrichtung 10, die von außen gespannt werden kann, ermöglicht ein Einschließen des selbstexpandierenden Elements 9 durch die Hülle 5. Durch Auslösen der Expansionsreaktion entsteht eine formschlüssige und kraftschlüssige Verbindung zwischen Behälter 2 und Deckel 4. Optional kann im Verbindungsbereich ein druckfestes Behältermaterial eingesetzt werden.

Die Figuren 4a und 4b zeigen einen Tank 1 mit einem Behälter, der aus mindestens zwei Teilen besteht, die im Bereich der zylindrischen Behälterwand ebenfalls mittels Spannmittel 11 und selbstexpandierenden Elementen 9 verbunden sind. Eine zuverlässige und dichte Verbindung kann so bereitgestellt werden.

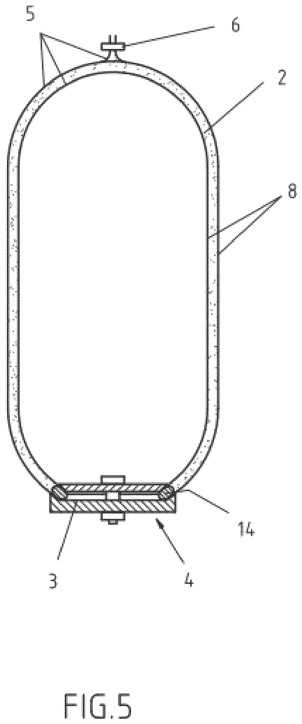

Die Figur 5 zeigt einen vertikal oder horizontal aufgestellten Tank für die Lagerung und Speicherung eines hydrogenen kryogenen Kraftstoffs. Die äußere Haltevorrichtung des Tanks ist in Figur 5 nicht dargestellt. Bei horizontaler Orientierung ist eine Neigung von ca. 2° vorteilhaft, damit das Medium leichter in Richtung Öffnung fließen kann. Der Behälter 2 ist zur Öffnung 3 hin verjüngt. Die Öffnung 3 ist ovalförmig. Der Behälter 2 ist im Bereich der Öffnung durch ein druckfestes Material 14 verstärkt. Ein Teil des Deckels 4 mit einem innenliegenden Teil und außenliegenden Teil, kann mithilfe der ovalen Öffnung 3 in der Weise geöffnet und geschlossen werden, dass durch ein Verdrehen des innenliegenden Teils sowohl ein Durchführen durch die Öffnung 3 als auch ein Einklemmen des Behälters 2 im Bereich des Druckfesten Materials 14 zwischen dem innenliegenden und außenliegenden Teil ermöglicht wird. Ein besonders zuverlässiges, dichtes Schließen kann so erzielt werden.

Der in Figur 5 dargestellte Tank kann insbesondere für die unterirdische Lagerung eines kryogenen Kraftstoffs an eine Tankstelle genutzt werden. Um die Sicherheit vor Beschädigungen des Tanks sowie der Umgebung weiter zu erhöhen und gleichzeitig eine bessere Wärmeisolierung zu erreichen, kann der Tank auf einer Aramid Honeycomb Zwischenschichtplatten horizontal aufliegen. Optional kann vorteilhaft der gesamte Bauraum mit Aramid Honeycomb Zwischenschichtplatten platzsparend ausgekleidet werden.

Der in Figur 1 dargestellte Tank 1 kann sowohl als Einzeltank als auch einer der mehreren Tanks 1 eines Registertanks sein, bei mehrere Tanks 1 nebeneinander angeordnet und durch Leitungen 13 miteinander verbunden sind.

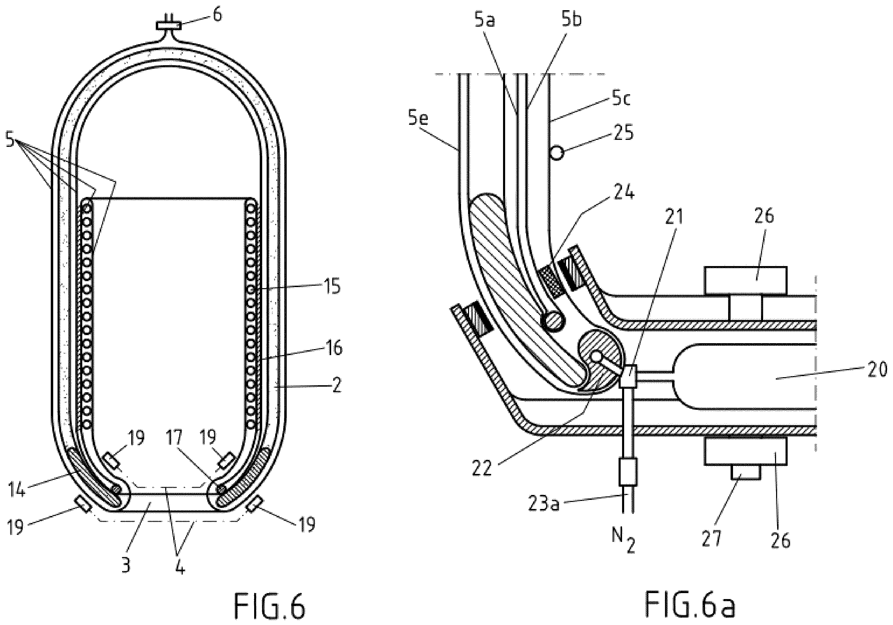

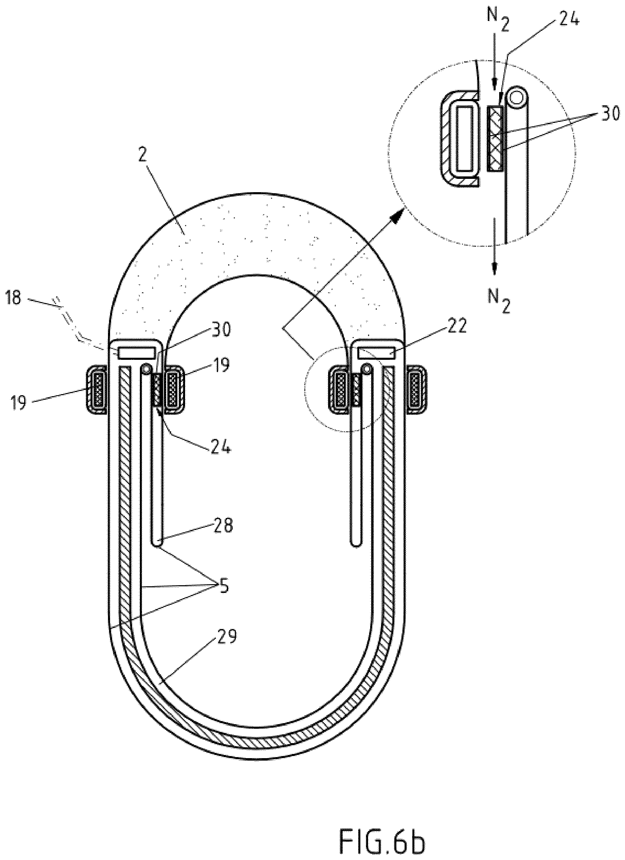

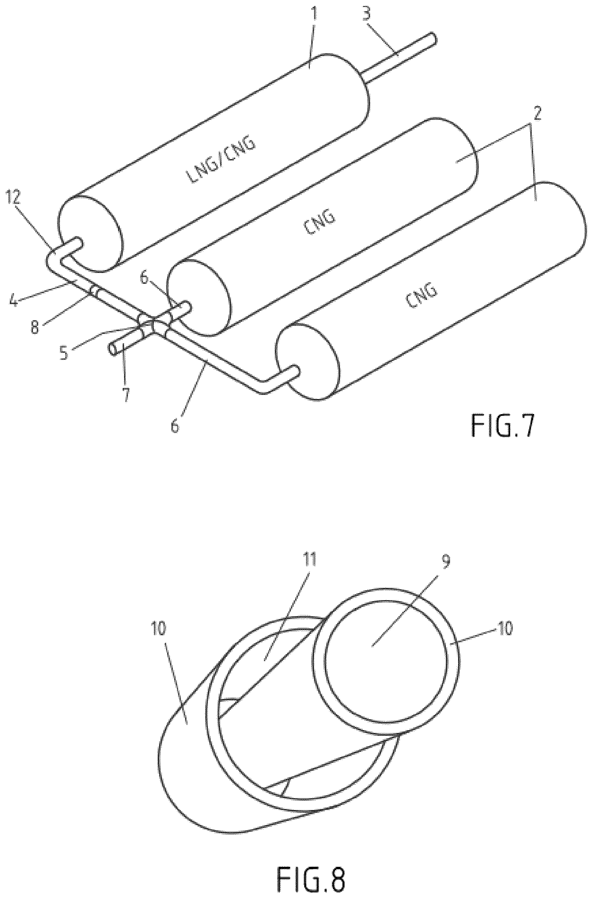

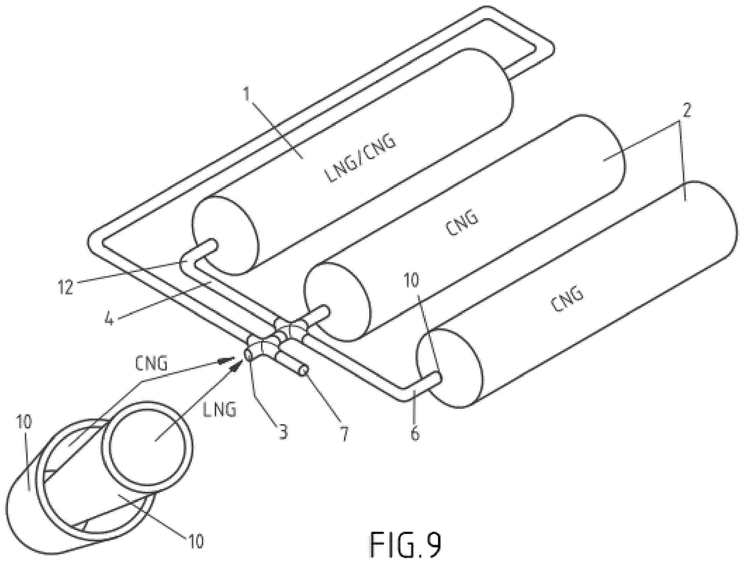

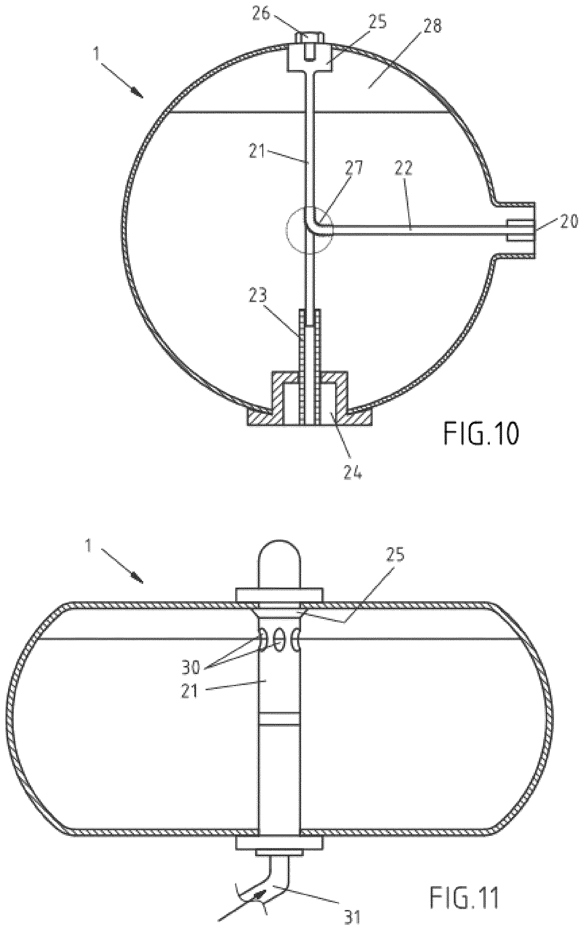

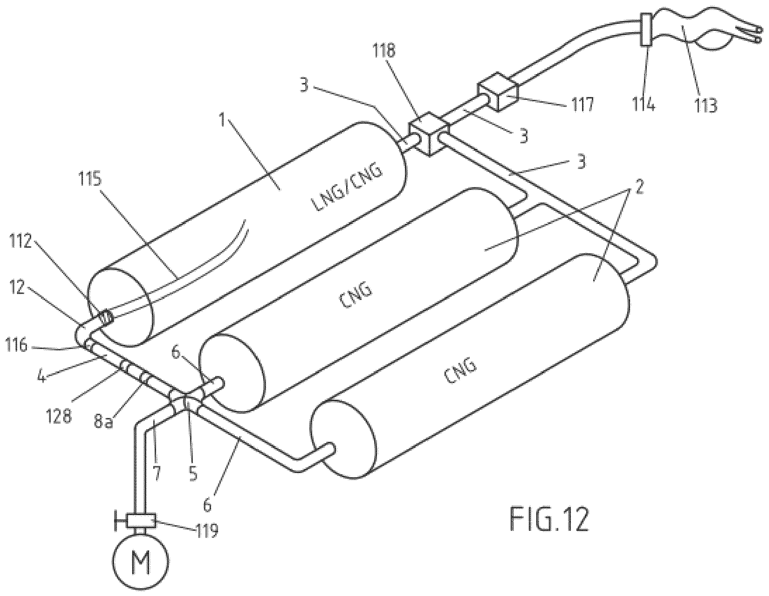

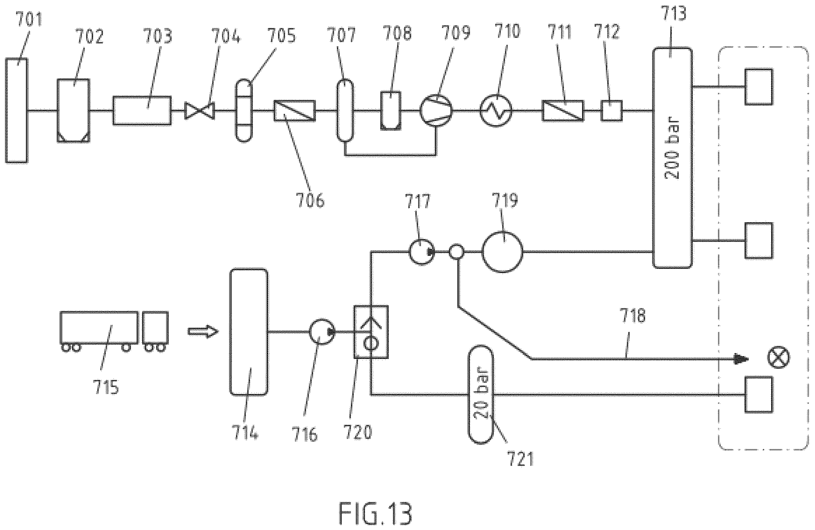

Die Figur 6 zeigt einen Kryogentank mit integrierter Kühlung. Die Kühlung des Tanks wird erreicht, indem die Wicklung des strumpfförmigen geschlossenen Teils zunächst in dem Behälter 2 aus vorzugsweise beschichtetem Isolierschaum gesteckt wird. An der Öffnung 3 des Behälters 2 wird die Strumpfhülle über einen Spann-Dichtring 17 erneut nach Innen gestülpt und erneut zum Deckel 4 am Ausgang des Behälters 2 zurückgeführt, so dass ein zylindrischer Innenraum mit kleinem Durchmesserunterschied entsteht, der mit einem Kühlmittel gefüllt werden kann. In diesen durch die Hülle 5 gebildeten, geschlossenen Raum ist eine spiralförmige Kühlleitung 15 bzw. ein spiralförmig umlaufender Stickstoffschlauch eingebracht. Die Befüllung mit Kühlmittel erfolgt mithilfe einer Steuerung Gasdruck-gesteuert und geregelt durch eine Zu- und Ableitung 22 und 23a (Fig 6a).

Als Kühlmittel wird vorzugsweise Stickstoff mit einer Temperatur von -200 °C verwendet. Stickstoff als Kühlmittel hat den Vorteil, dass bei einer Leckage einer Kühlmittelleitung der Motor weiterhin den im Tank gespeicherten LNG-Treibstoff trotz zusätzlicher Anteile von Stickstoff verbrennen kann und so ein Weiterfahren ermöglicht und ein Motorschaden bei Fehleranzeige und verringerter Leistung vermieden werden kann.

Steigt nun der Gasdruck im Kryogentank über einen vorbestimmten Grenzwert an, so wird Kühlmittel zugeführt. Damit sinkt der Gasdruck im Kryogentank ab und der Kühlmitteldurchsatz kann verringert werden bis zu einer vorgegebenen Grenztemperatur im Kryogentank. Diese Kältezufuhr muss in Abhängigkeit der mitgeführten Kühlkapazität, somit der Menge unter Hochdruck gelagerten Stickstoffs liegen. Die spiralförmige Zuleitung zum Tank ist gleichzeitig eine Art dehnbarer Expandier-Kanal zur Kühlung des Tanks. Darüber hinaus hat das gezeigte Kühlsystem den Vorteil, dass sich der zylindrische Kühlraum wie ein Kühlpanzer um das kryogene noch flüssige Methangas oder den Wasserstoff legt und dieses mit seiner wärmeleitenden vergrößerten Oberfläche nach außen abschirmt.

Eine weitere Kühlkonfiguration ist in Figur 6a gezeigt. Hierbei kann auf die spiralförmige Kühlleitung 15 verzichtet werden. Die Expansion des Kühlmittels, z.B. N2, erfolgt über ein oder mehrere Expander 20, die auf dem Deckel 4, Außenteil, montiert werden. Neben einem Expander 20 kann vorzugsweise auch eine Regeleinheit für das Kühlmittel angeordnet werden. Damit wird der Deckel 4 gut gekühlt. Ein Regelventil 21 steuert die Kältekapazität in den Tank. Der Verteilerring mit Ringdichtung 22 aus festem Material (Metall bzw. Kunststoff) wird in die letzte Umkehrschlaufe 5c/5e eingelegt sowie fest mit der Kevlarhülle verbunden. Nur hier wird der Kevlar-Strumpf mindestens zwei Mal (Aus und Eintritt) durchstoßen, liegt aber außerhalb des transportierten Kraftstoffes und ist auch durch die Dichtmagnetverschlüsse 19 und den Zuganker 26 gesichert.

Die Kühlgase werden durch den Deckel unten zum Verteilerventil geleitet bzw. zurückgeführt mittels der Zuleitung 23a bzw. Ableitung 23b (auf der gegenüberliegenden Seite; in Figur 6b nicht dargestellt). Das Kühlmittel wird in die Schlaufe 5b/5c geführt durch eine offenporige Schaummetall-Druckplatte 24 hindurch strömen. Die Schlaufe 5b/5c wird sich unter Kühlmittel- Innendruck rund verformen. Damit sie eine gesteuerte Form erhält wird der Schlauch 5b/5c mit einer oder mehreren Ringklammern 25 versehen, die bei der Montage angebracht werden. Anstelle einer Ringklammer 25 kann auch ein steifes Aramid-Netz zum Einschnüren des Kühlschlauchs 5b/5c verwendet werden, um die Form im expandierten Zustand zu definieren.

Der Deckel 4 hat wie bereits erwähnt einen doppelten Dichtverschluss durch Magnete 19 und den Schraubverschluss 26. Die Haupt-Gasleitungszuführung und Entnahme geht durch den Schraubverschluss 26 des Deckels 4 mithilfe einer Leitung 27 durch den Schraubverschluss 26.

Der LNG Kraftstoff ist ein fossiler nicht regenerativer Kraftstoff, weil er aus gereinigtem Erdgas durch den Tiefkühlprozess hergestellt wird. In Zukunft wird man diesem LNG biologisches Methangas beimischen weil das Grundmolekül CH4 bei beiden Kraftstoffen identisch ist. Die Menge der Beimischung entscheidet darüber wie klimafreundlich und nachhaltig der neue Kraftstoff ist. Eine Beimischung von 20 % Biomethan zum LNG bedeutet bereits eine Netto CO2 Reduktion von 50% gegenüber heutigen Gasmotoren.

Die Mischung von Biomethan mit LNG kann über den Deckel in idealer Weise mittels Einspritzung von mindestens einer Düse erfolgen, die in gleicher Art wie der hole Zugbolzen 26 bzw. 27 durch beide Deckelteile hindurchgeführt wird, aber eine Zuführrohrleitung hat mit Biomethan, die kreisförmig um den Zugbolzen angebracht mit einer Mischdüse ausgestattet ist. Wobei eine Zuführung ausreicht und die Verteilung auf mehrere Einzeldüsen über den Innendeckel eingearbeitet werden kann. Eine gute Beimischung des Biomethangases entscheidet über eine gute Verbrennung im Motor. Sie ist aber auch für Tankstellen und Kraftstoff Verteil-Stationen von Bedeutung, weil sich sonst das höher %tige Biomethan mit geringerer Dichte im Tank oben absetzt. Die gute Vermischung kann auch Tankintern über den Deckel erfolgen.

Eine weitere Kühlkonfiguration ist in Figur 6b gezeigt. Hierbei ist eine Schlauch-Strumpf Innenwicklung mit zylindrisch gerader Öffnung vorgesehen. Die Magnete 19 sind Permanent-Magnete in Gummiflex-Dichtung oder Druckprozess-Dichtung mit Pyrotechnik oder Druckgase bzw. Hydraulik. Die Zu- und Ableitung 18 und 22 befüllt den Kühlschlauch 28 mit im Außenbereich bereits expandiertem Kühlmittel und einem erforderlichen Druck, der leicht über dem Innendruck des Tankraums ist, mit Stickstoff. Um das Fassungsvermögen des Tanks zu erhöhen kann durch die Zu- und Ableitung 18 ebenfalls ein Vakuum im Kühlschlauch 28 erzeugt werden. Das Erzeugen eines Vakuums zwischen flexibler Hülle 5 und Behälter 2 kann optional dazu eingesetzt werden, ein besonders enges Anliegen der flexiblen Hülle 5 zu erreichen. Die Schaummetall-Druckplatte 24 umfasst ein poröses, Kühlmitteldurchlässigen offenporiges Schaummetall, z.B. Alu-Schaum, und ist umgeben von Druckplatten 30. So kann auf besonders einfache Weise und ohne zusätzliche Leitungen Kühlmittel von außerhalb des Tanks zum Kühlschlauch 28 transportiert werden.

Eine Kühlkonfiguration kann ebenfalls als Schlauch-Strumpf Außenwicklung ausgestaltet sein, wobei der Kühlschlauch 28 außen vom Tankinhalt 29 liegen kann. Dies hat den Vorteil, dass sich der Kühlschlauch 28 im Falle einer Undichtigkeit nicht im Tank, sondern im Außenbereich zwischen Behälter 2 und Tankinhalt befindet.

Wird der vertikal stehende Tank um 180° gedreht, so kann durch den Kühlschlauch 28 das Boil-Off Gas gekühlt werden und so die Standzeit erhöht werden.

## Patentansprüche

1. Tank (1), insbesondere Hochsicherheitstank, vorzugsweise für die Speicherung und Lagerung eines kryogenen Mediums, umfassend einen Behälter (2) mit Öffnung (3) und umfassend einen Deckel (4) für ein Verschließen der Öffnung, **gekennzeichnet durch** eine flexible, einteilige Hülle (5), die innen und außen am Behälter (2) anliegt und die an der Öffnung (3) umgeschlagen ist, wobei die Hülle (5) strumpfförmig ist, wobei das geschlossene Ende (7) der Hülle (5) innen oder außen am Behälter (2) anliegt.

2. Tank (1) nach Anspruch 1, **dadurch gekennzeichnet, dass** eine Öffnung (3) der Hülle (5) kraftschlüssig oder stoffschlüssig verschlossen ist, beispielsweise durch Verdrillen und Verklammern oder Verkleben.

3. Tank (1) nach einem der vorhergehenden Ansprüche, **dadurch gekennzeichnet, dass** die Hülle (5) eine flexible Folie oder ein gewebtes Material ist, insbesondere auf Basis von Aramid, Graphen, Kohlenstoffnanoröhren oder eine flexible Kunststofffolie mit Graphen Beschichtung ist.

4. Tank (1) nach einem der vorhergehenden Ansprüche, **dadurch gekennzeichnet, dass** die Hülle (5) eine Aramid-Hülle ist und/oder ein gewebtes Material ist, welches unterschiedliche Durchmesser und/oder unterschiedliche Dichten aufweist.

5. Tank (1) nach einem der vorhergehenden Ansprüche, **dadurch gekennzeichnet, dass** die Hülle (5) innen und/oder außen mehrlagig gewickelt am Behälter (2) anliegt, insbesondere außen einlagig und innen dreilagig.

6. Tank (1) nach einem der vorhergehenden Ansprüche, **dadurch gekennzeichnet, dass** der Behälter (2) aus einem kompressiblen und/oder wärmedämmenden Material hergestellt ist, vorzugsweise Schaumstoff.

7. Tank (1) nach einem der vorhergehenden Ansprüche, **dadurch gekennzeichnet, dass** der Deckel (4), der an die Hülle (5) des Behälters (2) angrenzt, mit der Öffnung (3) formschlüssig, kraftschlüssig und/oder stoffschlüssig verbunden ist, insbesondere durch ein selbstexpandierendes Element (9), eines Formgedächniselements, einer Schraub- oder Klebverbindung (8).

8. Tank (1) nach einem der vorhergehenden Ansprüche, **dadurch gekennzeichnet, dass** der Deckel (4) einen Durchlass und/oder ein Ventil (13) aufweist.

9. Tank (1) nach einem der vorhergehenden Ansprüche, **dadurch gekennzeichnet, dass** der Behälter (2) zur Öffnung (3) hin verjüngt ist und/oder die Öffnung (3) ovalförmig ausgeführt ist, wobei der Behälter (2) im Bereich der Öffnung (3) insbesondere ein druckfestes Material (14) aufweist.

10. Tank (1) nach einem der vorhergehenden Ansprüche, **gekennzeichnet durch** eine Geöffnet-Stellung und Geschlossen-Stellung des Deckels (4), wobei der Deckel (4) insbesondere ein relativ zum Behälter (2) innenliegendes Teil und außenliegendes Teil umfasst und beide Teile vorzugsweise ein Magnetelement (19) aufweisen.

11. Tank (1) nach einem der vorhergehenden Ansprüche, **dadurch gekennzeichnet, dass** die Hülle (5) innen derart mehrlagig gewickelt am Behälter (2) anliegt, dass die Hülle (5) einen geschlossenen Raum ausbildet, in dem insbesondere eine spiralförmig umlaufende Kühlleitung (15) angeordnet ist, wobei eine vorzugsweise temperatur- und/oder druckabhängige Zu- und Ableitung (18, 22) von Kühlmittel vorgesehen ist.

12. Verfahren zur Herstellung eines Tanks (1), wobei ein Behälter (2) mit Öffnung (3), ein Deckel (4) für ein Verschließen der Öffnung und eine strumpfförmige, flexible, einteilige Hülle (5) bereitgestellt wird, die innen und außen am Behälter (2) angelegt und die an der Öffnung (3) umgeschlagen wird und zwar derart, dass das geschlossene Ende (7) der strumpfförmigen Hülle (5) innen oder außen am Behälter (2) anliegt, wobei die Öffnung der strumpfförmigen Hülle verschlossen wird, so dass der Behälter (2) mit der einteiligen Hülle (5) vollständig ausgekleidet wird.

## Claims

1. Tank (1), especially a high security tank, preferably for accumulation and storage of a cryogenic medium, comprising a container (2) with an opening (3) and comprising a cover (4) for closing the opening,
**characterized by** a flexible unipartite cladding (5) which bears against an inside and an outside of the container (2) and which is folded over at the opening (3),
wherein the cladding (5) is stocking-liked, wherein the closed end (7) of the cladding (5) bears against the inside or outside of the container (2).

2. Tank (1) according to claim 1,
**characterized in that**
an opening (3) of the cladding (5) is closed off in a non-positively locking fashing or positive locking fashion, for example by twisting and clamping or adhesive bonding.

3. Tank (1) according to one of the preceding claims,
**characterized in that**
the cladding (5) is a flexible foil or a woven material, in particular based on aramide, graphene, carbon nanotubes or a flexible plastic foil with graphene coating.

4. Tank (1) according to one of the preceding claims,
**characterized in that**
the cladding (5) is an aramid cladding and/or is a woven material having varying diameters and/or varying densities.

5. Tank (1) according to one of the preceding claims,
**characterized in that**
the cladding (5) from the inside and/or outside bears in wound form against the container (2) in multiple layers, especially in one layer at the outside and in three layers at the inside.

6. Tank (1) according to one of the preceding claims,
**characterized in that**
the container (2) is made of a compressible and/or thermally insulating material, preferably foamed material.

7. Tank (1) according to one of the preceding claims,
**characterized in that**
the cover (4), which adjoins the cladding (5) of the container (2), is connected to the opening (3) in a positively locking fashion, a non-positively locking fashing and/or in a cohesive fashion, in particular by a self-expanding element (9), a shape memory element, a screw or adhesive connection (8).

8. Tank (1) according to one of the preceding claims,
**characterized in that**
the cover (4) has a passage and/or a valve (13).

9. Tank (1) according to one of the preceding claims,
**characterized in that**
the container (2) is narrowed toward the opening (3) and/or the opening (3) is of oval-shaped form, wherein the container (2) preferably has a pressure-resistant material (14) in the region of the opening.

10. Tank (1) according to one of the preceding claims,
**characterized in that**
an open position and a closed position of the cover (4), wherein the cover (4) especially comprises an inner part relative to the container (2) and an outer part elative to the container (2) and wherein both parts preferably have a magnetic element (19).

11. Tank (1) according to one of the preceding claims,
**characterized in that**
the cladding (5) bears in wound form against the container (2) in multiple layers at the inside such that the cladding (5) forms closed chamber in which there is arranged a spiral-shaped cooling line (15), and wherein a temperature - and/or pressure-dependent feed and discharge (18,22) of coolant are provided.

12. Method for producing a tank (1),
wherein a container (2) with an opening (3), a cover (4) for closing the opening (3) and a stocking-like, flexible, unipartite cladding (5) are provided, which cladding (5) is applied to the inside and outside of the container (2) and is folded over at the opening (3) such that the closed end (7) of the stocking-like cladding (5) bears on the inside or outside of the container (2), wherein the opening of the stocking-like cladding (5) is closed such, that the container (2) is completely lined with the unipartite cladding (5).

## Revendications

1. Réservoir (1), en particulier réservoir de haute sécurité, préférentiellement pour le stockage et le stockage d'un milieu cryogénique, comprenant un récipient (2) avec une ouverture (3) et comprenant un couvercle (4) pour fermer l'ouverture, **caractérisé par** une gaine (5) flexible d'une seule pièce, qui est contigue à l'intérieur et à l'extérieur du récipient (2) et qui est rabattue à l'ouverture (3), la gaine (5) étant en forme de bas, l'extrémité fermée (7) de la gaine (5) étant contigue à l'intérieur ou l'extérieur du récipient (2).

2. Réservoir (1) selon la revendication 1, **caractérisé en ce qu'**une ouverture (3) de la gaine (5) est obturée par fermeture de force ou par fermeture de matériau, par exemple par torsion, agrafage ou collage.

3. Réservoir (1) selon l'une des revendications précédentes, **caractérisé en ce que** la gaine (5) est un film plastique souple ou un matériau tissé, notamment à base d'aramide, de graphène, de nanotubes de carbone, ou un film plastique souple avec revêtement graphène.

4. Réservoir (1) selon l'une des revendications précédentes, **caractérisé en ce que** la gaine (5) est une gaine en aramide et/ou un matériau tissé ayant différents diamètres et/ou différentes densités.

5. Réservoir (1) selon l'une des revendications précédentes, **caractérisé en ce que** la gaine (5) est contigue au récipient (2) enroulée à l'intérieure et/ou à l'extérieure d'une manière multicouches, en particulier à l'extérieure d'une manière monocouche et à l'intérieure d'une manière tricouche.

6. Réservoir (1) selon l'une des revendications précédentes, **caractérisé en ce que** le réservoir (2) est réalisé en un matériau compressible et/ou calorifuge, préférentiellement en mousse.

7. Réservoir (1) selon l'une des revendications précédentes, **caractérisé en ce que** le couvercle (4) contigu à la gaine (5) du récipient (2) est relié à l'ouverture (3) par fermeture de forme, par fermeture de force et/ou par fermeture de matériau, en particulier au moyen d'un élément auto-expansible (9), d'un élément à mémoire de forme, d'une liaison par vis ou par colle (8).

8. Réservoir (1) selon l'une des revendications précédentes, **caractérisé en ce que** le couvercle (4) présente un passage et/ou une vanne (13).

9. Réservoir (1) selon l'une des revendications précédentes, **caractérisé en ce que** le récipient (2) est effilé vers l'ouverture (3) et/ou l'ouverture (3) est de forme ovale, le récipient (2) présentant dans la zone de l'ouverture (3) notamment un matériau (14) résistant à la pression.

10. Réservoir (1) selon l'une des revendications précédentes, **caractérisé par** une position ouverte et une position fermée du couvercle (4), le couvercle (4) comprenant en particulier une partie interne et une partie externe par rapport au récipient (2), les deux parties présentant préférentiellement un élément de magnétique (19).

11. Réservoir (1) selon l'une des revendications précédentes, **caractérisé en ce que** la gaine (5) est contigue au récipient (2) enroulée à l'intérieure d'une manière multicouches (5) de façon que la gaine forme un espace fermé, dans lequel est notamment disposée une conduite de refroidissement (15) circulant en spirale, une conduite (18, 22) d'entrée et de sortie de liquide de refroidissement préférentiellement en fonction de la température et/ou la pression étant disposée.

12. Procédé de fabrication d'un réservoir (1), dans lequel il est prévu un récipient (2) avec ouverture (3), un couvercle (4) pour fermer l'ouverture et une gaine (5) en une pièce, flexible, en forme de bas, qui est placée à l'intérieur et au-dessus du récipient (2) et qui est rabattue à l'ouverture (3) de façon que l'extrémité fermée (7) de la gaine en forme de bas (5) soit contigue à l'intérieur ou à l'extérieur du récipient (2), l'ouverture de la gaine en forme de bas étant fermée, de sorte que le récipient (2) soit complètement revêtu de la gaine en une pièce (5).
